# Europäisches Patentamt

# European Patent Office

# Office européen des brevets

(11) Veröffentlichungsnummer: **0 140 261**
**B1**

## EUROPÄISCHE PATENTSCHRIFT

(45) Veröffentlichungstag der Patentschrift:
**20.07.88**

(51) Int. Cl.⁴: **A 01 C 7/10**

(21) Anmeldenummer: **84112357.3**

(22) Anmeldetag: **13.10.84**

(54) **Sävorrichtung.**

(30) Priorität: **28.10.83 US 546689**

(43) Veröffentlichungstag der Anmeldung:
**08.05.85 Patentblatt 85/19**

(45) Bekanntmachung des Hinweises auf die Patenterteilung:
**20.07.88 Patentblatt 88/29**

(84) Benannte Vertragsstaaten:
**DE FR GB**

(56) Entgegenhaltungen:
**US-A-3 662 922**

(73) Patentinhaber: **DEERE & COMPANY, 1 John Deere Road, Moline Illinois 61265 (US)**

(72) Erfinder: **Wolf, Lester Carl, 2578 - 9 1/2 Street, East Moline Illinois 61244 (US)**
Erfinder: **Lundie, William Robert, 3645 8th Street, East Moline Illinois 61244 (US)**

(74) Vertreter: **Feldmann, Bernhard, DEERE & COMPANY European Office, Patent Department Steubenstrasse 36- 42 Postfach 503, D-6800 Mannheim 1 (DE)**

LIBER, STOCKHOLM 1988

## Beschreibung

Die Erfindung bezieht sich auf eine Sävorrichtung mit einer in einem Gehäuse angeordneten Dosierungsvorrichtung zur Regulierung der Ausflußrate von im Gehäuse aufgenommenem Material durch eine Auslaßöffnung, die mittels einer zwischen einer Offen- und einer Schließstellung verstellbar gelagerten, eine Öffnung aufweisenden Dosierungsplatte abdeckbar ist, die über einen eine Skala aufweisenden drehbaren Stellknopf einstellbar ist, dem ein zweiter über den Stellknopf einstellbarer, eine Bezugsskala aufweisender Anzeigeteil zugeordnet ist.

Es ist bereits eine Sävorrichtung der eingangs aufgeführten Art bekannt (US-A-3 662 922), die einen Sammelbehälter mit einer Dosierungsvorrichtung zeigt, die aus einer horizontal verschiebbaren Platte besteht, deren Endteil als Gewindestange ausgebildet ist, auf der ein drehbar gelagerter Stellknopf lagert. Der Stellknopf weist an seiner Stirnseite eine Skala von 0 bis 9 auf, und auf der Gewindestange der Dosierungsplatte ist ebenfalls eine Bezugsskala von 2 bis 12 angeordnet. Durch Drehen des Stellknopfes wird die Dosierungsplatte verstellt und die entsprechenden Zahlen des Stellknopfes jeweils einer entsprechenden Zahl der Gewindestange zugeordnet, um somit den Stellweg der Dosierungsplatte zur Regulierung der Ausflußrate von im Gehäuse aufgenommenem Düngemittel durch eine Auslaßöffnung zu ermitteln. Da die Zahlen des Stellknopfes in einer anderen Ebene angeordnet sind als die Zahlen der Gewindestange und da bei einer Verstellung der Dosierungsplatte keine Arretierung der Stellplatte in den einzelnen Stellstufen möglich ist, arbeitet eine derartige Dosierungsvorrichtung weniger genau. Außerdem lassen sich die Zahlen wesentlich schlechter ablesen.

Demgegenüber liegt der Erfindung die Aufgabe zugrunde, die Dosierungsvorrichtung für eine Sävorrichtung derart auszubilden und anzuordnen, daß über einen großen Stellbereich eine schrittweise Verstellung der Dosierungsvorrichtung bei guter Ablesbarkeit der auf der Dosierungsvorrichtung angeordneten Skalen möglich ist. Diese Aufgabe wird dadurch gelöst, daß der zweite Teil ein Folgerad ist, das an dem Gehäuse drehbar gelagert ist, schrittweise durch den Stellknopf gedreht wird und dessen Bezugssala mit der Skala des Stellknopfes in einer Ebene zusammenwirkt. Durch die vorteilhafte Ausbildung und Anordnung des Stellknopfes in Verbindung mit dem Folgerad wird auf einfache Weise eine Feinverstellung der Dosierungsplatte zur Regulierung des Ausflusses von im Gehäuse aufgenommenem Material durch die Auslaßöffnung möglich, wobei gleichzeitig durch die vorteilhafte Anordnung der beiden Skalen auf dem Stellknopf und dem Folgerad eine sehr gute Ablesung möglich ist, da die Teilflächen mit den entsprechenden Zahlen für den Ablesevorgang in eine Ebene gedreht werden können. Hierzu ist es Vorteilhaft, daß dem Stellknopf bzw. dem Folgerad lösbare, eine stufenweise Verstellung gestattende Arretierungselemente, beispielsweise ein Schrittschaltwerk, zugeordnet sind. Durch die stufenweise Verstellung des Stellknopfes mit dem zugehörigen Folgerad kennen auf einfache Weise jeweils zwei Zahlen genau in Übereinstimmung gebracht werden, um somit die Dosierungsöffnung ohne weiteres über die eingestellten Zahlen zu ermitteln. Hierzu ist es vorteilhaft, daß der Stellknopf auf einer Achse drehbar gelagert ist, die rechtwinklig zur Achse des Folgerades verläuft.

In weiterer Ausgestaltung der Erfindung ist es Vorteilhaft, daß der Stellknopf einen Ringflansch aufweist, auf dessen in etwa vertikal verlaufender Stirnfläche einen gleichmäßigen Abstand aufweisende Skalen vorgesehen sind, und daß das Folgerad einen kreisförmigen Ring mit einer Ringfläche aufweist, auf der einen gleichmäßigen Abstand aufweisende Skalen angeordnet sind. Ferner ist es vorteilhaft, daß die Ringfläche des Folgerades und die Stirnfläche des Ringflansches einander so zugeordnet sind, daß die Teilflächen mit den einander zugeordneten Zahlen zur Bestimmung des Stellweges der Dosierungsplatte in etwa in einer Ebene liegen. In weiterer Ausgestaltung der Erfindung ist es vorteilhaft, daß der Stellknopf an seiner einen Seite ein Stellelement trägt, daß das Folgerad mit zahlreichen einen Abstand untereinander aufweisenden Stellelementen ausgerüstet ist, daß das Stellelement des Stellknopfes jeweils nach einer Umdrehung von ca. 360° mit den Stellelementen des Folgerades in Wirkverbindung bringbar ist und daß sich das Folgerad derart weiterbewegt, daß beide Skalen zur Bestimmung der Stellgröße in eine Ableseebene gebracht werden, und daß auf dem Stellknopf und dem Folgerad als Skalen ausgebildete Zahlen vorgesehen sind, die zueinander in Beziehung gesetzt werden und eine Skalenreihe von 0 bis 99 ergeben, wobei die eingestellte Zahl durch eine im Gehäuse vorgesehene Fensteröffnung sichtbar ist. Da der Stellknopf an seiner einen Seite ein Stellelement aufweist, kann dieser jeweils mit den am Folgerad angeordneten Stellelementen in Eingriff gebracht werden, wenn der Stellknopf beispielsweise um 360° auf seiner Achse gedreht ist. Auf diese Weise lassen sich erst die Zahlen zwischen 0 und 9 auf dem Stellknopf ablesen, während bei der Drehung von der Zahl 9 wieder auf die Zahl 0 das Folgerad mit verstellt wird, so daß die Zahl 1 auf dem Folgerad sichtbar wird, die mit der Zahl 0 des Stellknopfes die Zahl 10 ergibt. Durch die Zuordnung der beiden Zahlen läßt sich somit auf einfache Weise eine Zahlenreihe zwischen 0 und 99 einstellen und somit eine Feinverstellung der Dosierungsplatte vornehmen. Eine stufenweise Verstellung des Stellknopfes und des mit diesem wirkungsmäßig verbundenen Folgerades ist auf einfache Weise dadurch möglich, daß der Stellknopf bzw. das Folgerad zahlreiche einen gleichmäßigen Abstand untereinander aufweisende Raststellen bzw. Vertiefungen aufweist, in die durch Drehen des Stellknopfes bzw. des Folgerades ein federelastisch angeordnetes Arretierungselement einrastbar ist. Dabei ist es ferner vorteilhaft, daß in der Stellung, in der die Auslaßöffnung im Gehäuse mittels der Dosierungsplatte vollständig verschlossen ist, die Zahl des Stellknopfes mit der Zahl des Folgerades die Zahlenkombination 00 ergibt, während in der maximalen Durchflußstellung die Zahlenkombination 99 einstellbar ist, und daß das an der Rückseite des Ringflansches vorgesehene Stellelement als Stift ausgebildet ist, der mit an der Rückseite des Folgerades vorgesehenen Antriebszähnen das Schrittschaltwerk bildet, wobei die an dem Stellknopf und an dem Folgerad vorgesehenen Raststellen eine stufenweise Verstellung von Stellknopf und Folgerad ermöglichen.

Im folgenden wird die Erfindung anhand von lediglich einen Ausführungsweg darstellenden Zeichnungen näher erläutert.

Es zeigt:

Fig. 1 eine perspektivische Darstellung einer Sävorrichtung mit der erfindungsgemäßen Dosierungsvorrichtung,

Fig. 2 eine Ansicht entlang der Linie 2-2 gemäß Fig. 1, wobei Teile des Sammelbehälters für Düngemittel weggeschnitten sind,

Fig. 3 eine perspektivische Darstellung der Dosierungsvorrichtung,

Fig. 4 die Dosierungsvorrichtung in auseinandergezogener Darstellung,

Fig. 5 eine Seitenansicht entlang der Linie 5-5 gemäß Fig. 3,

Fig. 6 eine Draufsicht entlang der Linie 6-6 gemäß Fig. 5,

Fig. 7 eine Vorderansicht entlang der Linie 7-7 gemäß Fig. 5,

Fig. 6 eine Seitenansicht entlang der Linie 8-8 gemäß Fig. 7,

Fig. 9 eine Seitenansicht entlang der Linie 9-9 gemäß Fig. 6.

In der Zeichnung ist mit 10 eine Sävorrichtung einer in der Zeichnung nicht dargestellten Sämaschine bezeichnet, die einen Rahmen 14 aufweist, der mittels zweier parallel verlaufender Lenker 12 an einen Hauptrahmen 16 der in der Zeichnung nicht dargestellten Sämaschine angeschlossen ist. Die parallel verlaufenden Lenker 12 ermöglichen eine individuelle Verstellung einer jeden Sävorrichtung 10 mit Bezug auf die benachbarten Sävorrichtungen, die an dem Hauptrahmen 16 vertikal verstellbar angeschlossen sind.

Der Rahmen 14 stützt sich über Laufräder 18 auf dem Boden ab, die die Höhenlage der in der Zeichnung nicht dargestellten Furchenöffner bestimmen. Zwei nebeneinander angeordnete Scheibenschare 20 zur Schließung der Furchen sind hinter den Laufrädern 18 am Rahmen 14 angeschlossen. Die Scheibenschare 20 wirken seitlich auf die entsprechenden Furchen, so daß diese gleichmäßig geschlossen werden und die abgelegten Saatkörner zudecken.

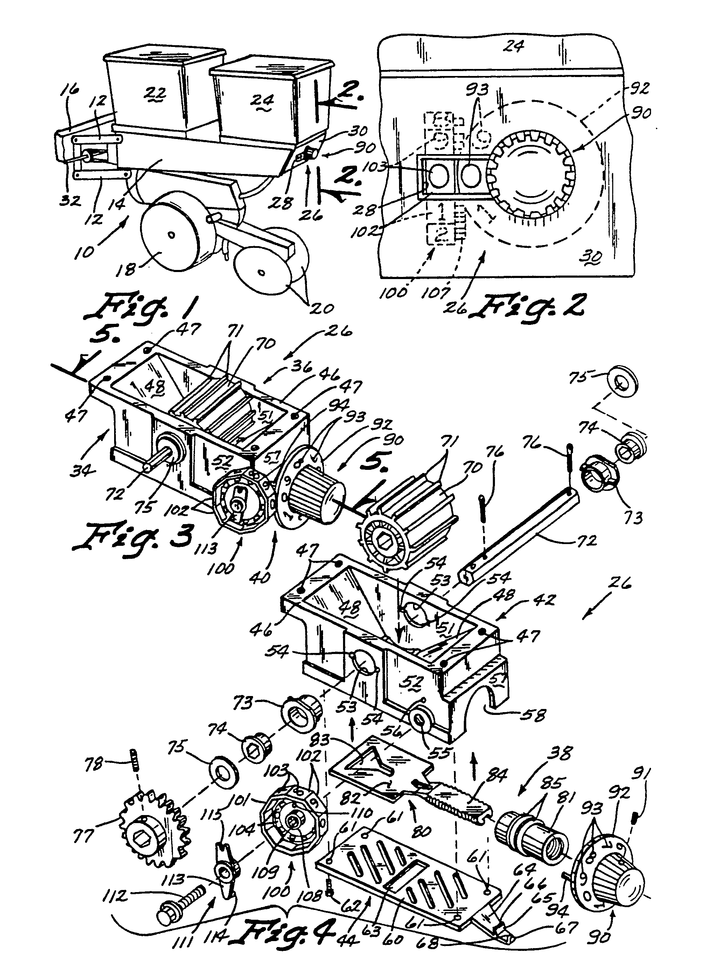

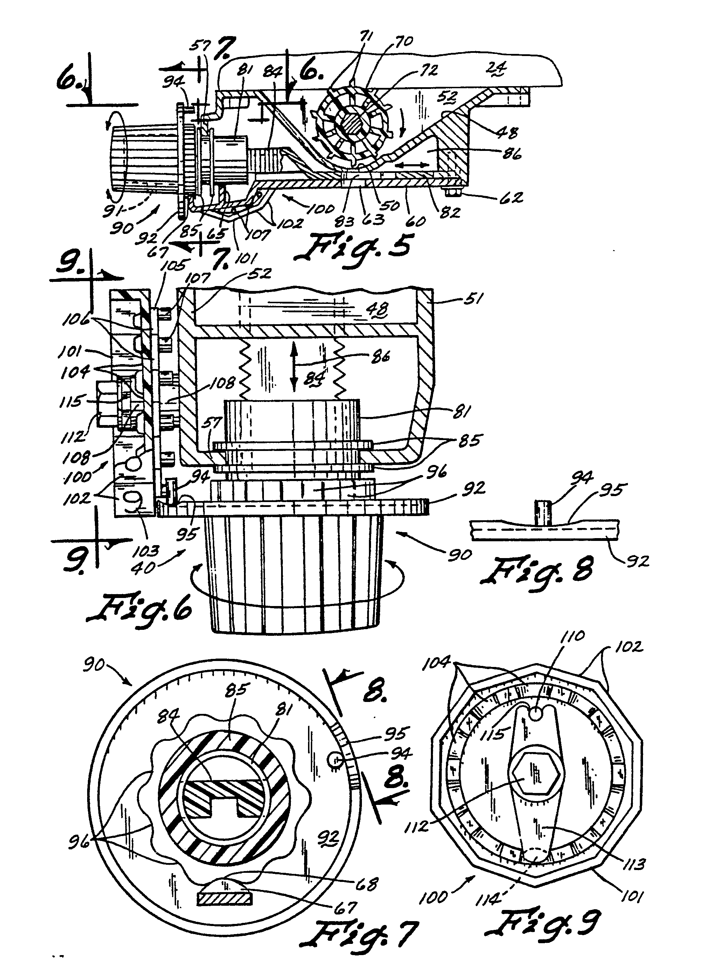

Der obere Teil des Rahmens 14 weist einen Sammelbehälter 22 für Saatgut mit einer in der Zeichnung nicht dargestellten Dosierungsvorrichtung sowie einen Sammelbehälter 24 mit einer Dosierungsvorrichtung 26 auf, die durch eine Fensteröffnung 28 sichtbar ist, die in einem Querträger 30 des Rahmens 14 (siehe Fig. 2) sichtbar ist. Die Dosierungsvorrichtung für das Saatgut und die Dosierungsvorrichtung 26 für das Düngemittel sind mit einer Hauptantriebsvorrichtung 32 wirkungsmäßig verbunden (siehe Fig. 1).

Wie aus den Figuren 3 und 4 hervorgeht, weist die Dosierungsvorrichtung 26 ein Gehäuse 34, Förderelemente 36 zur Dosierung des Düngemittels, eine verschiebbare Vorrichtung 38 zum Durchlaß des Düngemittels sowie eine Einstellvorrichtung 40 auf.

Wie ferner aus den Figuren 4 und 5 hervorgeht, weist das Gehäuse 34 ein Gehäusemittelstück 42 mit einer Bodenplatte 44 auf. Das Gehäusemittelstück 42 weist einen oberen Rand 46 mit zahlreichen Gewindebohrungen 47 auf, die zur Aufnahme von Schraubenbolzen dienen, mittels derer das Gehäuse an die Unterseite des Sammelbehälters 24 zur Aufnahme von Düngemittel angeschlossen ist. Zwei konvergierend zueinander verlaufende Wände 48 werden durch zwei parallel zueinander verlaufende Seitenwände 51, 52 begrenzt, die im unteren Bereich untereinander fluchtende kreisförmige Öffnungen 53 aufweisen, in denen zwei gegenüberliegend angeordnete Nuten 54 angeordnet sind. In der Seitenwand 52 sind eine Gewindebohrung 55 sowie eine Anschlußbohrung 56 angeordnet. Die Rückwand 57 im Gehäusemittelstück 42 weist eine halbkreisförmige Öffnung 58 auf, die im unteren Bereich der Rückwand 57 angeordnet ist. Die Bodenplatte 44 ist mit einem plan ausgebildeten Teil 60 ausgerüstet, in dem Bohrungen 61 zur Aufnahme von Schraubenbolzen 62 vorgesehen sind, die zum Anschluß der Bodenplatte an das Gehäusemittelstück 42 dienen. Im plan ausgebildeten Teil 60 der Bodenplatte 44 befindet sich ein quer verlaufender Schlitz 63, der sich direkt unterhalb der Auslaßöffnung 50 befindet, wenn das Gehäuse 34 (siehe Fig. 5) zusammengebaut ist. Eine nach unten abgewinkelte Lasche 64 erstreckt sich von dem Teil 60 nach hinten und trägt eine nach oben gerichtete Nase 65, die stirnseitig eine konkav ausgebildete Aussparung 66 aufweist, wobei hinter der Nase 65 eine weitere nach oben gerichtete Nase 67 angeordnet ist, die mit einer konvex ausgebildeten Stirnfläche 68 versehen ist.

Die Förderelemente 36 sind im einzelnen in Fig. 4 veranschaulicht. Hierzu gehört eine Förderwalze 70 mit sich radial erstreckenden Rippen 71, die im Arbeitseinsatz unmittelbar oberhalb der im Boden des Gehäusemittelstückes 42 vorgesehenen Auslaßöffnung 50 angeordnet sind. Die Förderwalze 70 lagert auf einer Welle 72, die in den gegenüberliegenden Öffnungen 53 mittels einer Lagerbuchse 73 drehbar aufgenommen ist, wobei hierzu die Welle eine mit einer Sechskantöffnung versehene Buchse 74 aufweist, die in der Lagerbuchse 73 drehbar aufgenommen ist. An der Stirnseite der kleineren Buchse 74 befinden sich eine Ringscheibe 75 sowie ein Sicherungsbolzen 76 zur Drehsicherung der Welle 72 im Gehäusemittelstück 42. Am äußeren Ende der Welle 72 ist ein Zahnrad 77 angeordnet und mittels eines Schraubenbolzens 78 gesichert. Das Zahnrad 77 ist mit der Hauptantriebsvorrichtung 32 (siehe Fig. 1) wirkungsmäßig verbunden.

Die Vorrichtung 38 weist eine Dosierungsplatte 80 sowie eine Einstellmutter 81 auf. Wie insbesondere aus den Figuren 4 und 5 hervorgeht, ist die Dosierungsplatte 80 verschiebbar im Gehäuse 34 aufgenommen, und zwar zwischen den nach unten zusammenlaufenden Wänden 48 und der Bodenplatte 44. Die Dosierungsplatte 80 weist einen planen Teil 82 auf, in dem eine Y-förmige Dosierungsöffnung 83 angeordnet ist, wobei sich an den Teil 82 ein nach oben versetzt angeordneter Gewindeteil 84 anschließt. Die Einstellmutter 81 kann auf den Gewindeteil 84 aufgeschraubt werden, die hierzu mit zwei fest angeordneten Ringflanschen 85 ausgerüstet ist, die im eingebauten Zustand beiderseits der Rückwand 57 liegen und in der halbkreisförmigen Öffnung 58 aufgenommen sind, so daß die Einstellmutter 81 gegen eine Axialverstellung gesichert ist (siehe Fig. 5). Die Aussparung 66 in der Nase 65 dient zur Aufnahme der Einstellmutter 81, wenn diese in das Gehäuse 34 entsprechend eingebaut ist. Die Dosierungsplatte 80 kann wahlweise zwischen einer ersten Stellung und einer zweiten Stellung verstellt werden. In der ersten Stellung ist der Gewindeteil 84 aus der Einstellmutter 81 herausverstellt, so daß der keine Öffnung aufweisende plane Teil 82 unterhalb der Auslaßöffnung 50 liegt und verhindert, daß Düngemittel aus dem Gehäuse 34 herausfließt. In der zweiten Stellung ist der Gewindeteil 84 vollständig in die Einstellmutter 81 hineinverstellt, so daß die Y-förmige Öffnung 83 unterhalb der Auslaßöffnung 50 liegt und somit Düngemittel aus dem Gehäuse 34 herausfließen kann. Diese Stellung der Dosierungsplatte 80 entspricht der maximalen Ausflußstellung. In Fig. 5 ist eine Stellung angegeben, in der die Auslaßöffnung 50 zu ca. 50 % freigegeben ist, wobei die Pfeilrichtig 86 angibt, in welche Richtung die Dosierungsplatte 80 verstellbar ist.

Die Einstellvorrichtung 40 zur Beeinflussung der Ausflußrate des Düngemittels enthält einen Stellknopf 90 mit einem eine rauhe Oberfläche aufweisenden Stellteil zur Verstellung der Einstellmutter 81 (Fig. 4). Der Stellknopf 90 weist ferner einen Ringflansch 92 auf, der mit dem Stellteil 91 fest verbunden ist. Auf dem Ringflansch befindet sich eine Skala 93 mit verschiedenen Zahlen zur Bestimmung der Durchflußrate. Im Bereich des Außenumfanges und an der nach vorne gerichteten Stirnfläche des Ringflansches 92 sitzt ein Arretierungsstift 94 (Fig. 4 und 6). Die Stirnfläche des Ringflansches 92 ist mit einer Vertiefung 95 versehen, in der der Arretierungsstift 94 angeordnet ist, wobei die Vertiefung im Bereich des Außenumfanges des Ringflansches 92 angeordnet ist (Fig. 7 und 8). Hinter dem Flansch 92 befindet sich ein Ansatz mit einer wellenförmigen Oberfläche, die durch zahlreiche sich radial erstreckende Vertiefungen 96 gebildet ist (Fig. 5 und 7), die zur Aufnahme des konvexen Endteiles der Nase 67 dienen (Fig. 4, 5 und 7).

Aus Fig. 4 geht ferner hervor, daß ein Folgerad 100 eine Ringfläche 101 aufweist, die aus zahlreichen planen Flächen 102 gebildet ist, wobei eine jede mit einem Indikator bzw. einer entsprechenden Zahl 103 versehen ist. Die äußere Oberfläche des Folgerades 100 weist zahlreiche sich axial erstreckende Vertiefungen 104 auf, die innerhalb der Ringfläche 101 liegen. Eine jede Vertiefung 104 ist einer entsprechenden Zahl 103 (Fig. 9) zugeordnet. An der Innenseite der Ringfläche 101 befindet sich ein Ringflansch 105 mit flachen Teilflächen 106, die mit den Flächen 102 korrespondieren und sich von der inneren Oberfläche des Folgerades 100 nach innen erstrecken, wobei nach innen gerichtete Antriebszähne 107 sich von den Teilflächen 106 mittig erstrecken (Fig. 6). Das Folgerad 100 weist eine zentrisch angeordnete Öffnung 109 auf, die von einem Distanzring 108 umgeben ist, während im Bereich des Außenumfanges des Folgerades 100 eine Anschlußbohrung 110 vorgesehen ist.

Das Folgerad 100 ist auf einer Buchse 111 drehbar gelagert, die mit dem Gehäusemittelstück 42 der einen Schraubenbolzen 112 verbunden ist, der hierzu in die Gewindebohrung 55 eingeschraubt ist. Damit ein Drehen der Buchse 111 verhindert wird, wird der Schraubenbolzen 112 entsprechend angezogen, so daß der Schraubenkopf die Buchse 111 gegen die Oberfläche des Gehäusemittelstückes 42 anpreßt. Auf dem Schraubenbolzen 112 befindet sich ein zweiarmiger Flügelteil 113, wobei der eine Arm mit einer konvex ausgebildeten Nase 114 ausgerüstet ist, der mit den entsprechenden Vertiefungen 104 des Folgerades 100 in Eingriff bringbar ist. Der gegenüberliegende Arm des Flügelteils 113 weist eine sich radial erstreckende, nach außen hin offene Nut 115 auf, mittels der ein genaues Ausrichten bei der Montage möglich ist. Hierzu wird die Nut 115 zur Anschlußbohrung 110 und zur Anschlußbohrung 56 im Gehäusemittelstück 42 genau ausgerichtet.

Wie am besten aus Fig. 6 hervorgeht, kann der Stellknopf 90 um eine Achse gedreht werden, die rechtwinklig zur Drehachse des Folgerades 100 verläuft. Die Drehebene des Folgerades 100 verläuft tangential zum Ringflansch 92 (Fig. 2), und die hintere Kante des Folgerades 100, die durch die zahlreichen Flächen 102 gebildet ist, befindet sich tangential dicht neben dem Ringflansch 92 (Fig. 6).

Die innere Oberfläche des Ringflansches 92 berührt eine Teilfläche 106 des Ringflansches 105 und verhindert dadurch ein unbeabsichtigtes Verstellen des Folgerades 100. Obgleich zahlreiche verschiedene Indikatoreinrichtungen verwendet werden können, sind der Knopf 90 und das Folgerad 100 mit Indikatorzahlen 0 bis 9 gekennzeichnet. Wird beispielsweise die Indikatorzahl 0 des Stellknopfes 90 mit der Nummer 0 des Folgerades 100 zusammengebracht, so ist die Schließstellung der Dosierungsplatte 80 eingestellt. So kann beispielsweise die Dosierungsplatte 80 zwischen einer ersten Stellung, in der die Auslaßöffnung verschlossen ist, und einer zweiten Stellung, in der die Auslaßöffnung vollständig geöffnet ist, verstellt werden. Die innenliegenden Teile des Folgerades 100 lassen sich ohne weiteres über die Fensteröffnung 28 im Querträger 30 (Fig. 2) beobachten.

Im Arbeitseinsatz, beginnend von der Schließstellung, sind die Positionen 0 des Folgerades 100 und des Stellknopfes 90 durch die Fensteröffnung sichtbar, so daß eine Stellung "00" abgelesen werden kann. Durch Drehen des Stellknopfes 90 um eine Raststelle kann die Position "01" eingestellt werden. Wird der Stellknopf 90 gedreht, so springt das konvexe Ende der Nase 67 aus der Vertiefung 96 in die nachfolgende Vertiefung (Fig. 7). Dieser Stellvorgang kann ohne weiteres durch die Fensteröffnung 28 wahrgenommen werden. Gleichzeitig führt das zu einer entsprechenden Verstellung der Dosierungsplatte 80, die durch das Gehäusemittelstück 42 verdeckt ist.

Der Stift 94 befindet sich in der Vertiefung 95 auf der Oberfläche des Ringflansches 92 zwischen den Nummern 0 und 9. Wenn der Stellknopf 90 gedreht wird und dabei die einzelnen Nummern 1 bis 9 sich an der Fensteröffnung 28 vorbeibewegen, greift der Stift 94 in die entsprechenden Antriebszähne 107 und dreht das Folgerad 100 schrittweise um je ein Zehntel der Umdrehung, so daß die entsprechend nächsthöhere Zahl eingestellt wird. Wird beispielsweise der Stellknopf von 0 nach 9 verstellt, so dreht sich das Folgerad 100 entsprechend und die entsprechend kleinere Zahl wird an der Fensteröffnung 28 sichtbar. Die Vertiefung 95 im Bereich des Stiftes 94 erlaubt eine freie Drehung des Folgerades 100 von einer flachen Teilfläche 106 zu der anliegenden Teilfläche, wobei der Kontakt der inneren Fläche des Ringflansches 92 mit der Teilfläche 106 unterbrochen wird, wenn dabei die Kante, die durch zwei aneinander anliegende Teilflächen 106 gebildet wird, den Bereich der Vertiefung 95 passiert hat. Wird das Folgerad 100 gedreht, so springt der konvexe Teil der Nase 114 von der einen Vertiefung 104 in die nachfolgende Vertiefung (Fig. 9), was zu einer unstetigen Bewegung der Indikatorzahlen führt. Die diskontinuierliche Bewegung der Indikatorzahlen auf dem Stellknopf und dem Folgerad 100 eliminiert die Möglichkeit, daß nur Teile von zwei nebeneinander liegenden Nummern des Folgerades bzw. des Stellknopfes in der Fensteröffnung 28 sichtbar werden. Somit wird also gewährleistet, daß die Zahlen immer klar durch die Durchlaßöffnung erkennbar sind.

Die Einstellvorrichtung kann auf die gewünschte Durchflußrate eingestellt werden und läßt sich dann auch ohne weiteres auf andere beliebige Durchflußraten einstellen, die von der Beschaffenheit des Düngemittels abhängen. Da der Stellknopf 90 in einer der verschiedenen Stellungen festgehalten wird, kann die Durchflußrate, die einmal eingestellt ist, nicht unbeabsichtigt verändert werden, beispielsweise infolge von Schwingungen, die von der Sävorrichtung ausgehen.

## Patentansprüche

1. Sävorrichtung (10) mit einer in einem Gehäuse (34, 42) angeordneten Dosierungsvorrichtung (26) zur Regulierung der Ausflußrate von im Gehäuse (34, 42) aufgenommenen Material durch eine Auslaßöffnung (50), die mittels einer zwischen einer offen- und einer Schließstellung verstellbar gelagerten, eine Öffnung (83) aufweisenden Dosierungsplatte (80) abdeckbar ist, die über einen eine Skala (93) aufweisenden drehbaren Stellknopf (90) einstellbar ist, dem ein zweiter über den Stellknopf (90) einstellbarer, eine Bezugsskala (103) aufweisender Anzeigeteil zugeordnet ist, dadurch gekennzeichnet, daß der zweite Teil ein Folgerad (100) ist, das an dem Gehäuse (42) drehbar gelagert ist, schrittweise durch den Stellknopf (90) gedreht wird und dessen Bezugsskala (103) mit der Skala (93) des Stellknopfes (90) in einer Ebene zusammenwirkt.

2. Sävorrichtung nach Anspruch 1, dadurch gekennzeichnet, daß dem Stellknopf (90) bzw. dem Folgerad (100) lösbare, eine stufenweise Verstellung gestattende Arretierungselemente, beispielsweise ein Schrittschaltwerk, zugeordnet sind.

3. Sävorrichtung nach Anspruch 1 oder 2, dadurch gekennzeichnet, daß der Stellknopf (90) auf einer Achse drehbar gelagert ist, die rechtwinklig zur Achse des Folgerades (100) verläuft.

4. Sävorrichtung nach einem oder mehreren der vorherigen Ansprüche, dadurch gekennzeichnet, daß der Stellknopf (90) einen Ringflansch (92) aufweist, auf dessen in etwa vertikal verlaufender Stirnfläche einen gleichmäßigen Abstand aufweisende Skalen (93) vorgesehen sind.

5. Sävorrichtung nach einem oder mehreren der vorherigen Ansprüche, dadurch gekennzeichnet, daß das Folgerad (100) einen kreisförmigen Ring mit einer Ringfläche (101) aufweist, auf der einen gleichmäßigen Abstand aufweisende Skalen (103) angeordnet sind.

6. Sävorrichtung nach Anspruch 5, dadurch gekennzeichnet, daß die Ringfläche (101) des Folgerades (100) und die Stirnfläche des Ringflansches (92) einander so zugeordnet sind, daß die Teilflächen mit den einander zugeordneten Zahlen zur Bestimmung des Stellweges der Dosierungsplatte (80) in etwa in einer Ebene liegen.

7. Sävorrichtung nach einem oder mehreren der vorherigen Ansprüche, dadurch gekennzeichnet, daß der Stellknopf (90) an seiner einen Seite ein Stellelement (Stift 94) trägt, daß das Folgerad (100) mit zahlreichen einen Abstand untereinander aufweisenden Stellelementen (Antriebszähne 107) ausgerüstet ist, daß das Stellelement (Stift 94) des Stellknopfes (90) jeweils nach einer Umdrehung von ca. 360° mit den Stellelementen des Folgerades (100) in Wirkverbindung bringbar ist und daß sich das Folgerad derart weiterbewegt, daß beide Skalen zur Bestimmung der Stellgröße in eine Ableseebene gebracht werden.

8. Sävorrichtung nach einem oder mehreren der vorherigen Ansprüche, dadurch gekennzeichnet, daß auf dem Stellknopf (90) und dem Folgerad (100) als Skalen ausgebildete Zahlen vorgesehen sind, die zueinander in Beziehung gesetzt werden und eine Skalenreihe von 0 bis 99 ergeben, wobei die eingestellte Zahl durch eine im Gehäuse (42) vorgesehene Fensteröffnung sichtbar ist.

9. Sävorrichtung nach einem oder mehreren der vorherigen Ansprüche, dadurch gekennzeichnet, daß der Stellknopf (90) zahlreiche einen gleichmäßigen Abstand untereinander aufweisende Raststellen bzw. Vertiefungen (96) aufweist, in die durch Drehen des Stellknopfes ein federelastisch angeordnetes Arretierungselement (Nase 67) einrastbar ist.

10. Sävorrichtung nach einem oder mehreren der vorherigen Ansprüche, dadurch gekennzeichnet, daß das Folgerad (100) zahlreiche einen gleichmäßigen Abstand untereinander aufweisende Raststellen bzw. Vertiefungen (104) aufweist, in die durch Drehen des Folgerades (100) ein federelastisch angeordneten Arretierungselement (Nase 114) einrastbar ist.

11. Sävorrichtung nach einem oder mehreren der vorherigen Ansprüche, dadurch gekennzeichnet, daß in der Stellung, in der die Auslaßöffnung (50) im Gehäuse (42) mittels der Dosierungsplatte (80) vollständig verschlossen ist, die Zahl des Stellknopfes mit der Zahl des Folgerades die Zahlenkombination 00 ergibt, während in der maximalen Durchflußstellung die Zahlenkombination 99 einstellbar ist.

12. Sävorrichtung nach den Ansprüchen 10 und 11, dadurch gekennzeichnet, daß das an der Rückseite des Ringflansches (92) vorgesehene Stellelement als Stift (94) ausgebildet ist, der mit an der Rückseite des Folgerades vorgesehenen Antriebszähnen (107) das Schrittschaltwerk bildet, wobei die an dem Stellknopf (90) und an dem Folgerad (100) vorgesehenen Raststellen eine stufenweise Verstellung von Stellknopf und Folgerad ermöglichen.

## Claims

1. Sowing device (10) with a metering device (26) arranged in a housing (34, 42) for regulating the outflow rate of material contained in the housing, through an outlet opening (50) which can be covered by means of a metering plate (80) having an opening (83) and adjustably mounted between an open and a closed position, the plate being adjustable by a setting knob (90) having a scale (93), with an associated second indicating part with a reference scale (103), adjustable by means of the setting knob (90), characterized in that the second part is a follower wheel (100) which is rotatably mounted on the housing (42), is rotated stepwise by the setting knob (90) and whose reference scale (103) cooperates in one plane with the scale (93) of the setting knob (90).

2. Sowing device according to claim 1, characterized in that the setting knob (90) or the follower wheel (100) has associated releasable arresting elements permitting stepwise adjustment, for example a stepping mechanism.

3. Sowing device according to claim 1 or 2, characterized in that the setting knob (90) is mounted rotatably on an axis extending at right angles to the axis of the follower wheel (100).

4. Sowing device according to one or more of the preceding claims, characterized in that the setting knob (90) has an annular flange (92) on which is provided a regularly spaced scale (93) on the approximately vertical front face.

5. Sowing device according to one or more of the preceding claims, characterized in that the follower wheel (100) comprises a circular ring with an annular surface (101) on which is arranged a regularly spaced scale (103).

6. Sowing device according to claim 5, characterized in that the annular surface (101) of the follower wheel (100) and the front surface of the annular flange (92) are so arranged with respect to each other that the partial surfaces with the numbers arranged together to determine the position of the metering plate (80) lie approximately in one plane.

7. Sowing device according to one or more of the preceding claims, characterized in that the setting knob (90) carries a setting element (rod 94) on one side, in that the follower wheel (100) is equipped with numerous setting elements (drive teeth 107) spaced from one another, in that the setting element (rod 94) of the setting knob (90) can be brought into active engagement with the setting elements of the follower wheel (100) after each rotation of about 360°, and in that the follower wheel is then further moved so that both scales for determining the size of the setting are brought into one viewing plane.

8. Sowing device according to one or more of the preceding claims, characterized in that numerals forming scales are provided on the setting knob (90) and the follower wheel (100), which can be brought into correspondence and provide a scale from 0 to 99, the setting number being visible through a window opening provided in the housing (42).

9. Sowing device according to one or more of the preceding claims, characterized in that the setting knob (90) comprises numerous, regularly spaced detent positions or depressions (96), in which a spring biased arresting element (nose 67) is engageable on rotation of the setting knob.

10. Sowing device according to one or more of the preceding claims, characterized in that the follower wheel (100) comprises numerous regularly spaced detent positions or depressions (104), in which a spring biased arresting element (nose 114) is engageable on rotation of the follower wheel (100).

11. Sowing device according to one or more of the preceding claims, characterized in that, in the position in which the outlet opening (50) in the housing (42) is completely closed by means of the metering plate (80), the number on the setting knob in combination with the number on the follower wheel presents the value 00, whilst the number combination 99 can be set in the maximum through flow position.

12. Sowing device according to claims 10 and 11, characterized in that the setting element provided on the back of the annular flange (92) is formed as a rod (94) which forms a stepping mechanism with the drive teeth (107) provided on the back of the follower wheel, whereby the detent positions provided on the setting knob (90) and on the follower wheel (100) facilitate a stepwise adjustment of the setting knob and follower wheel.


**Revendications**

1. Semoir (10) comportant un dispositif doseur (26), disposé dans un carter (34, 42) pour la régulation du débit de sortie d'une matière reçue dans le carter (34, 42) par un orifice de sortie (50) pouvant être recouvert au moyen d'un registre de dosage (80) comportant un orifice (83), monté de façon à pouvoir être déplacé entre une position ouverte et une position fermée, pouvant être réglé au moyen d'un bouton de réglage rotatif (90) comportant une graduation (93), auquel est conjugué un second élément indicateur réglable au moyen du bouton de réglage (90), qui comporte une graduation de référence (103), caractérisé en ce que le second élément est une roue asservie (100) montée de façon à pouvoir tourner sur le carter (42), tournant pas à pas sous l'action du bouton de réglage (90) et dont la graduation de référence (103) coopère dans un plan avec la graduation (93) du bouton de réglage (90).

2. Semoir selon la revendication 1, caractérisé en ce qu'il est de combiner avec le bouton de réglage (90) ou la roue as servie (100) des éléments de verrouillage amovibles permettant un déplacement pas à pas, par exemple un dispositif d'encliquetage.

3. Semoir selon la revendication 1 ou 2, caractérisé en ce que le bouton de réglage (90) est monté de façon à pouvoir tourner sur un axe qui s'étend perpendiculairement à l'axe de la roue asservie (100).

4. Semoir selon une ou plusieurs des revendications précédentes, caractérisé en ce que le bouton de réglage (90) comporte une bride annulaire (92) sur la face terminale sensiblement verticale de laquelle sont prévues des graduations (93) présentant un écartement régulier.

5. Semoir selon une ou plusieurs des revendications précédentes, caractérisé en ce que la roue asservie (100) comporte une bague circulaire munie d'une surface annulaire (101) sur laquelle sont prévues des graduations (103) présentant un écartement régulier.

6. Semoir selon la revendication 5, caractérisé en ce que la surface annulaire (101) de la roue asservie (100) et la face terminale de la bride annulaire (92) sont disposées l'une par rapport à l'autre de façon que les surfaces partielles comportant les nombres conjugués les uns aux autres et servant à la détermination de la course de réglage du registre de dosage (80) se trouvent sensiblement dans un plan.

7. Semoir selon une ou plusieurs des revendications précédentes, caractérisé en ce que le bouton de réglage (90) porte, sur l'un de ses côtés, un élément de réglage (broche 94), en ce que la roue asservie (100) comporte de nombreux éléments de réglage ou positionnement (dents d'entraînement 107) écartés les uns des autres, en ce que l'élément de réglage (broche 94) du bouton de réglage (90) peut être amené dans une relation fonctionnelle, après chaque rotation d'environ 360°, avec les éléments de réglage de la roue asservie (100), et en ce que la roue asservie effectue un déplacement supplémentaire de façon que les deux graduations soient amenées dans un plan de lecture pour la détermination de la grandeur de réglage.

8. Semoir selon une ou plusieurs des revendications précédentes, caractérisé en ce au'il est prévu, sur le bouton de réglage (90) et sur la roue asservie (100), des chiffres ou nombres constituant des graduations qui sont mis en relation mutuelle et fournissent une série de graduations de 0 à 99, le nombre réglé étant visible par un orifice formant fenêtre prévu dans le carter (42).

9. Semoir selon une ou plusieurs des revendications précédentes, caractérisé en ce que le bouton de réglage (90) présente de nombreuses positions de crantage ou dépressions (104) présentant entre elles un écartement régulier, dans lesquelles, sous l'effet de la rotation du bouton de réglage, un élément de verrouillage (ergot 67) agencé de façon à présenter l'élasticité d'un ressort, peut s'encliqueter.

10. Semoir selon une ou plusieurs des revendications précédentes, caractérisé en ce que la roue asservie (100) présente de nombreuses positions de crantage ou dépression (104) présentant entre elles un écartement régulier, dans lesquelles, sous l'effet de la rotation de la roue asservie (100), un élément de verrouillage (ergot 114), agencé de façon à présenter l'élasticité d'un ressort, peut s'encliqueter.

11. Semoir selon une ou plusieurs des revendications précédentes, caractérisé en ce que, dans la position dans laquelle l'orifice de sortie (50) prévu dans le carter (42) est complètement fermé par le registre de dosage (80), le chiffre ou nombre porté par le bouton de réglage forme, avec le chiffre ou nombre de la roue asservie, la combinaison numérique 00, tandis que, dans la position de débit de passage maximum, la combinaison numérique 99 peut être obtenue par réglage.

12. Semoir selon les revendications 10 et 11, caractérisé en ce que l'élément de réglage ou positionnement prévu sur la face arrière de la bride annulaire (92) se présente sous la forme d'une broche (94) qui forme, avec des dents d'entraînement (107) prévues sur la face arrière de la roue asservie, le dispositif d'encliquetage, les positions de crantage prévues sur le bouton de réglage (90) et sur la roue asservie (100) permettant un déplacement pas à pas du bouton de réglage et de la roue asservie.

Fig. 1

Fig. 2

Fig. 3

Fig. 4

Fig.5

Fig.6

Fig.7

Fig.8

Fig.9